(19) **Europäisches Patentamt / European Patent Office / Office européen des brevets**

(11) **EP 3 956 559 B1**

(12) **FASCICULE DE BREVET EUROPEEN**

(45) Date de publication et mention de la délivrance du brevet:
**24.01.2024 Bulletin 2024/04**

(21) Numéro de dépôt: **20713653.2**

(22) Date de dépôt: **27.03.2020**

(51) Classification Internationale des Brevets (IPC):
**F03D 7/04** *(2006.01)*   **F03D 7/02** *(2006.01)*
**G05B 17/02** *(2006.01)*

(52) Classification Coopérative des Brevets (CPC):
**F03D 7/046; F03D 7/0292;** F03D 7/0224;
F05B 2260/84; F05B 2270/32; F05B 2270/332;
Y02E 10/72

(86) Numéro de dépôt international:
**PCT/EP2020/058739**

(87) Numéro de publication internationale:
**WO 2020/212119 (22.10.2020 Gazette 2020/43)**

(54) **PROCEDE ET SYSTEME DE CONTROLE D'UNE GRANDEUR D'UNE EOLIENNE PAR CHOIX DU CONTROLEUR PAR UN APPRENTISSAGE AUTOMATIQUE**

VERFAHREN UND SYSTEM ZUR STEUERUNG EINER QUANTITÄT EINER WINDTURBINE DURCH AUSWAHL DER STEUERUNG ÜBER MASCHINENLERNEN

METHOD AND SYSTEM FOR CONTROLLING A QUANTITY OF A WIND TURBINE BY CHOOSING THE CONTROLLER VIA MACHINE LEARNING

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **16.04.2019 FR 1904071**

(43) Date de publication de la demande:
**23.02.2022 Bulletin 2022/08**

(72) Inventeurs:
• **COLLET, David**
  **92852 RUEIL-MALMAISON CEDEX (FR)**
• **SABIRON, Guillaume**
  **92852 RUEIL-MALMAISON CEDEX (FR)**
• **DI DOMENICO, Domenico**
  **92852 RUEIL-MALMAISON CEDEX (FR)**
• **AL-AMIR, Mazen**
  **38400 SAINT MARTIN D'HERES (FR)**

(73) Titulaires:
• **IFP Energies nouvelles**
  **92852 Rueil-Malmaison (FR)**
• **Centre National de la Recherche Scientifique**
  **75794 Paris Cedex 16 (FR)**
• **Université Grenoble Alpes**
  **38400 Saint-Martin-d'Hères (FR)**
• **Institut Polytechnique de Grenoble**
  **38031 Grenoble Cedex 1 (FR)**

(74) Mandataire: **IFP Energies nouvelles Département Propriété Industrielle Rond Point de l'échangeur de Solaize BP3 69360 Solaize (FR)**

(56) Documents cités:
**EP-A1- 3 336 349      CN-A- 107 654 336
US-A1- 2011 115 224    US-A1- 2017 328 346**

**Description**

**Domaine technique**

La présente invention concerne le domaine du contrôle des éoliennes, en particulier du contrôle de l'angle d'inclinaison individuel ou du pas individuel d'au moins une pale d'une éolienne.

Une éolienne permet de transformer l'énergie cinétique du vent en énergie électrique ou mécanique. Pour la conversion du vent en énergie électrique, elle se compose des éléments suivants :

- un mât permettant de placer un rotor à une hauteur suffisante pour permettre son mouvement (nécessaire pour les éoliennes à axe horizontal) ou de placer ce rotor à une hauteur lui permettant d'être entraîné par un vent plus fort et régulier qu'au niveau du sol. Le mât abrite généralement une partie des composants électriques et électroniques (modulateur, commande, multiplicateur, générateur, ...) ;

- une nacelle montée au sommet du mât, abritant des composants mécaniques, pneumatiques, certains composants électriques et électroniques, nécessaires au fonctionnement de la machine. La nacelle peut tourner pour orienter la machine dans la bonne direction ;

- un rotor, fixé à la nacelle, comprenant plusieurs pales (en général trois) et le nez de l'éolienne. Le rotor est entraîné par l'énergie du vent, il est relié par un arbre mécanique directement ou indirectement (via un système de boîte de vitesse et d'arbre mécanique) à une machine électrique (générateur électrique...) qui convertit l'énergie recueillie en énergie électrique. Le rotor est potentiellement doté de systèmes de contrôle tels que des pales à angle variable ou des freins aérodynamiques;

- une transmission, composée de deux axes (arbre mécanique du rotor et arbre mécanique de la machine électrique) reliés par une transmission (boite de vitesse).

Depuis le début des années 1990, l'énergie éolienne a connu un regain d'intérêt, en particulier dans l'Union Européenne où le taux de croissance annuel est d'environ 20 %. Cette croissance est attribuée à la possibilité inhérente de production d'électricité sans émissions de carbone. De plus, à la vue des objectifs fixés lors de la COP21, une nette décarbonisation de l'énergie devrait avoir lieu dans le siècle à venir. L'énergie éolienne apparaît comme l'une des énergies renouvelables les plus matures pour la transition énergétique à venir, en témoigne la croissance de sa capacité de puissance installée, qui devrait continuer d'augmenter pendant plusieurs dizaines d'années encore. L'industrie de l'énergie éolienne représente déjà des centaines de milliards d'euros et devrait continuer de croîtrer, par conséquence une diminution des coûts de production de l'énergie éolienne peut générer des centaines de millions, voir des milliards d'euros d'économie. De plus, afin de maximiser la production énergétique, l'industrie éolienne a tendance à accroître le diamètre du rotor, ce qui cause une augmentation des charges mécaniques sur les pales et le rotor. Afin de soutenir cette croissance, le rendement des éoliennes doit continuer à être amélioré. La perspective d'augmentation de production d'énergie éolienne nécessite le développement d'outils de production efficaces, et d'outils de contrôle avancé pour améliorer les performances des machines. Toutes les éoliennes sont donc conçues avec un système de régulation de la puissance.

Pour cette régulation de la puissance, des contrôleurs sont conçus pour des aérogénérateurs à vitesse variable. Les objectifs des contrôleurs sont de maximiser la puissance électrique récupérée, de minimiser les fluctuations de vitesse du rotor et de minimiser la fatigue et les moments extrêmes de la structure (pales, mât et plate-forme).

Pour cela, le contrôle des éoliennes à vitesse variable se divise en trois catégories :

- Le contrôle de lacet (contrôle de l'orientation de l'éolienne par rapport au vent)
- Le contrôle du couple générateur (maximisation de la puissance de l'éolienne quand le vent est inférieur à la vitesse nominale admise par l'éolienne)
- Le contrôle du pas des pales (régulation du couple aérodynamique de l'éolienne quand le vent est supérieur au nominal par inclinaison des pales)

Le contrôle des pales peut lui-même être divisé en deux types de stratégie de contrôle, le contrôle collectif des pales (CPC : Collective Pitch Control) pour lequel chaque pale a le même angle d'inclinaison, et le contrôle individuel des pales (IPC : Individual Pitch Control) pour lequel chaque pales a un angle différent d'inclinaison. L'objectif principal du CPC est de réguler le couple aérodynamique de l'éolienne, pour ne pas basculer en survitesse, à cela il est possible d'ajouter un objectif de régulation de la force de poussée sur le rotor.

**Technique antérieure**

Le CPC considère un vent moyen qui traverse le rotor, et admet donc l'hypothèse que le vent est uniforme sur la surface du rotor. Cette hypothèse est de moins en moins vraie en raison de l'augmentation constante du diamètre des rotors produits (pouvant atteindre près de 200m). L'IPC est décrit notamment dans les documents suivants :

- Bossanyi, E. (2003). Individual blade pitch control for load réduction. Wind Energy, 119-128,
- Schlipf, D. (2010). Look-ahead cyclic pitch control using LiDAR. The science of making torque from wind,
- Burton, T. (2011). Wind Energy Handbook.,
- Lu, Q., Bowyer, R., & Jones, B. L. (2015). Analysis and design of Coleman transform-based individual pitch controllers for wind-turbine load réduction. Wind Energy, 1451-1468

Dans ces travaux, l'IPC est considéré avec la transformée de Coleman (Coleman, R. P., & Feingold, A. M. (1957). Theory of self-excited mechanical oscillations of helicopter rotors with hinged blades. National Advisory Committee for Aerounautics.) qui permet de passer du repère rotationnel des pales au repère fixe du moyeu de l'éolienne. Via cette transformation, les moments hors du plan sur chaque pale sont transformés en moments de tangage et de lacet sur le moyeu, qui traduisent un déséquilibre des charges aérodynamiques sur les pales de l'éolienne. La plupart du temps l'IPC est utilisé en supplément du CPC (Burton, 2011 ; Bossanyi, 2003; Lu, Bowyer, & Jones, 2015; Schlipf, 2010), et le contrôleur IPC donne un décalage d'angle sur chaque pale, tel que la somme des décalage d'angle soit nulle, ce qui permet à l'IPC de ne pas perturber la bonne régulation du CPC (Burton, 2011). A ce jour, un seul contrôleur synthétisant conjointement les régulations CPC et IPC (Raach, S., & Schlipf, D. (2014). Nonlinear model prédictive control of floating wind turbines with individual pitch control. American Control Conférence (ACC), (pp. 4434-4439)) a été proposé dans la littérature.

L'évaluation de la durée de vie ou de la fatigue d'une éolienne est un processus complexe, car les signaux résultants des simulations doivent être analysés via un algorithme de comptage et l'application de la règle de Palmgrem-Miner (Miner, M. (1945). Cumulative Damage. Fatigue Journal of Applied MEchnaics), qui relie les cycles de chargement à la fraction de durée de vie du composant consommée. Le comptage n'est pas le résultat d'une simple fonction algébrique mais d'un algorithme, connu sous le nom d'algorithme de comptage rainflow (RainFlow Counting ou RFC (Downing & Socie, 1982)). Ce comptage rend l'expression de la fatigue discontinue et non intégrable sur le temps. D'autre part, plusieurs travaux ont présenté des techniques de prédiction de fatigue en fonction des caractéristiques du vent pour une éolienne en boucle fermée avec un contrôleur donné (Dimitrov, N., & Kelly, M. (2018). From wind to loads: wind turbine site-specific load estimation using databases with high-fidelity load simulations. Wind Energy Science Discussions; Murcia, J., Réthoré, P., & Dimitrov, N. (2017). Uncertainty propagation through an aeroelastic wind turbine model using polynomial surrogates. Renewable Energy, 910-922). Une étude a montré que les vents qu'une ferme éolienne peut subir peuvent être regroupés en différents types de vent (Clifton, A., & Schreck, S. (2013). Turbine inflow characterization at the national wind technology center. Journal of Solar Energy Engineering). Ces types de vent évoluent en fonction des variations climatiques entre jour et nuit (dues aux différences d'ensoleillement et de température), et d'une journée à l'autre (due aux mouvements des masses d'air sur la surface du globe). Les caractéristiques du vent évoluent donc lentement.

En outre, différents procédés de contrôle ont été développés pour améliorer la récupération d'énergie tout en limitant la fatigue de l'éolienne.La fatigue pourrait être utilisée comme fonction objectif dans une technique de contrôle optimal classique, mais les spécificités du calcul de fatigue et de l'algorithme de comptage utilisé, qui viennent d'être discutées, rendent cette utilisation très complexe. Pour pallier cette complexité, la fatigue est souvent approximée avec des intégrales de fonctions quadratique, cependant si l'intégrale d'une fonction quadratique permet de considérer qualitativement la fatigue, cela ne permet pas de la considérer quantitativement (Knudsen, Bak, & Svenstrup, 2015). Considérer la quantité de fatigue sur différents éléments d'une éolienne est important puisque cela permet de bien pondérer le compromis entre leur fatigue. Un travail a notamment visé à minimiserla fatigue en adaptant les pondérations d'une commande prédictive MPC pour que la fonction de coût quadratique reflète la fatigue (Barradas & Wisniewski, 2016).

Parmi ces procédés de contrôle, la demande de brevet FR 2 976 630 (US 10,041,473) concerne un procédé pour optimiser la production d'énergie électrique d'une éolienne à axe horizontal, en effectuant un contrôle non linéaire de l'orientation des pales prenant en compte les dynamiques du système, tout en minimisant l'impact mécanique sur la structure. L'impact est minimisé en modifiant l'angle d'inclinaison des pales de façon à ce que la force aérodynamique appliquée à la nacelle conduise à une vitesse nulle du haut du mât. Le procédé s'appuie notamment sur un modèle physique de la force aérodynamique.

De plus, la demande de brevet FR 2 988 442 (US 9,458,826) concerne un procédé pour lequel on contrôle un angle d'inclinaison desdites pales, au moyen des étapes suivantes :

a) on détermine une consigne de couple aérodynamique et une consigne de couple de la machine électrique permettant de maximiser la puissance récupérée, à partir de mesures de vitesse de vent, de vitesse du rotor et de vitesse de la machine électrique ;

b) on modifie au moins l'une desdites consignes en lui soustrayant un terme proportionnel à un écart entre vitesse mesurée du rotor et vitesse mesurée de la machine électrique ;

c) on détermine un angle d'inclinaison des pales permettant de réaliser ladite consigne de couple aérodynamique ;

d) on oriente les pales selon ledit angle d'inclinaison.

D'autres documents tels que CN 107 654 336 A et US 2017/328346 A1 montrent des procédés d'optimisation d'éoliennes.

Toutefois, les procédés proposés dans l'état de la technique ne donnent pas complètement satisfaction en termes d'optimisation du contrôle en réduisant la fatigue sur l'éolienne, en particulier pour toutes les conditions de vent, notamment car elles ne considèrent pas la réduction de la fatigue globale de l'éolienne comme fonction objectif..

**Résumé de l'invention**

Afin de minimiser l'impact du vent sur la fatigue d'une éolienne, la présente invention concerne un procédé de contrôle d'une grandeur d'une éolienne par une sélection automatique en ligne d'un contrôleur qui minimise la fatigue de l'éolienne. Pour cela, le procédé repose sur une base de données (construite hors ligne) de simulations d'une liste de contrôleurs, et sur une étape d'apprentissage automatique (« machine learning ») en ligne pour déterminer le contrôleur optimal en termes de fatigue de l'éolienne. Ainsi, le procédé permet de sélectionner automatiquement en ligne des contrôleurs, sur un critère de fatigue, et de basculer entre les contrôleurs au gré des évolutions des conditions de vent mesurées.

L'invention concerne un procédé de contrôle d'une grandeur d'une éolienne, pour lequel on dispose d'une liste d'une pluralité de contrôleurs de ladite grandeur de ladite éolienne, dans lequel on réalise les étapes suivantes :

a) On construit, hors ligne, une base de données en simulant pour chaque contrôleur de ladite liste et pour une pluralité de données de vent, une fonction coût représentative de la fatigue de ladite éolienne ;

b) On mesure, en ligne, des données de vent ;

c) On détermine, en ligne, un contrôleur de ladite liste qui minimise la fatigue de ladite éolienne pour lesdites données de vent mesurées au moyen d'un apprentissage automatique à partir de ladite base de données ; et

d) On contrôle, en ligne, ladite grandeur de ladite éolienne au moyen dudit contrôleur déterminé.

Selon un mode de réalisation, ladite pluralité de contrôleurs de ladite liste sont choisis parmi les contrôleurs proportionnels intégral PI, et/ou les régulateurs H∞ avec différentes fonctions de pondération, et/ou des régulateurs quadratiques linéaires LQR avec différentes pondérations, et/ou des commandes prédictives MPC avec différentes pondérations et/ou des commandes prédictives basées sur des mesures LIDAR.

Conformément à une mise en oeuvre, on met en oeuvre ledit apprentissage automatique au moyen d'une méthode de régression qui prédit la fatigue de ladite éolienne pour chacun des contrôleurs de ladite liste ou au moyen d'une méthode de classification desdits contrôleurs de ladite liste qui minimisent le critère de coût en fonction des données de vent mesurées.

Avantageusement, on met en oeuvre ledit apprentissage automatique au moyen d'une méthode de régression au moyen des étapes suivantes :

i) On standardise les données de vent mesurées ;

ii) On réalise une augmentation polynomiale desdites données de vent mesurées ; et

iii) On réalise une régression linéaire desdites données de vent augmentées polynomialement au moyen d'un changement d'espace de la valeur cible.

Alternativement, on met en oeuvre ledit apprentissage automatique au moyen d'une méthode de régression basée sur une méthode de forêt aléatoire, de réseau de neurones, de machine à vecteurs de support ou de processus gaussiens.

Selon un aspect, on contrôle l'angle individuel ou le pas individuel d'au moins une pale de ladite éolienne.

Selon une option, lesdits contrôleurs de ladite liste prennent en compte en outre une erreur de régulation entre une consigne de régulation de ladite grandeur de ladite éolienne et une mesure de ladite grandeur de ladite éolienne.

Conformément à une caractéristique, lesdites données de vent utilisées pour la construction de ladite base de données sont issues de mesures sur le site de ladite éolienne.

Selon un mode de réalisation, lesdites données de vent utilisées pour la construction de ladite base de données sont issues d'un simulateur de vent.

En outre, l'invention concerne un système de contrôle d'une grandeur d'une éolienne mettant en oeuvre le procédé de contrôle selon l'une des caractéristiques précédentes, ledit système de contrôle comprenant des moyens de stockage de ladite liste de contrôleurs, et de ladite base de données construite en simulant pour une pluralité de données de vent une fonction coût représentative de la fatigue de ladite éolienne pour chaque contrôleur de ladite liste, des moyens de mesures de données de vent, des moyens de détermination d'un contrôleur de ladite liste qui minimise la fatigue de ladite éolienne pour lesdites données de vent mesurées au moyen d'un apprentissage automatique à partir de ladite base de données, et des moyens de contrôle de ladite grandeur de ladite éolienne.

D'autres caractéristiques et avantages du procédé selon l'invention, apparaîtront à la lecture de la description ci-après d'exemples non limitatifs de réalisations, en se référant aux figures annexées et décrites ci-après.

## Liste des figures

La figure 1 illustre les étapes du procédé de contrôle selon un mode de réalisation de l'invention.

La figure 2 illustre l'étape d'apprentissage automatique par régression selon une variante de réalisation de l'invention.

La figure 3 est une courbe entre les valeurs réelles et les valeurs estimées de la fatigue pour un exemple de réalisation de l'invention.

## Description des modes de réalisation

La présente invention concerne un procédé de contrôle d'une grandeur d'une éolienne, dans un but de minimiser la fatigue de l'éolienne, ou d'au moins une partie de l'éolienne (c'est-à-dire un composant de l'éolienne), en fonction de données de vents mesurées. Le procédé selon l'invention se base sur le choix du contrôleur optimal (en termes de fatigue) au moyen d'un apprentissage automatique (de l'anglais « machine learning »). Le principe consiste à développer un algorithme d'apprentissage automatique permettant de construire une cartographie liant des conditions de vent mesurées à une quantité de fatigue mécanique. Un des buts de l'invention pouvant être de créer un modèle de substitution pour estimer la durée de vie de l'éolienne dans un parc éolien avec une distribution de vent donnée quasi-instantanément.

Dans la suite de la description, l'expression « fatigue de l'éolienne » désigne également la fatigue d'au moins un composant de l'éolienne.

On appelle grandeur de l'éolienne, tout paramètre de l'éolienne pouvant être contrôlé. Selon un mode de réalisation préféré, la grandeur peut être l'angle d'inclinaison individuel ou le pas individuel des pales utilisé dans le contrôle individuel des pales IPC.

On appelle données de vent, les informations relatives au vent arrivant sur l'éolienne. Ces données de vent peuvent être mesurées notamment par un capteur Lidar (télédétection par Laser), par un anémomètre ou un capteur SODAR (« Sonic Détection And Ranging », télédétection des ondes sonores, etc. Par exemple non limitatif, les données de vent peuvent comprendre notamment les informations suivantes : moyenne et écart-type de la vitesse moyennée du vent sur le rotor de l'éolienne, des gradients horizontaux et verticaux de la vitesse du vent sur le rotor, les désalignements de tangage et de lacet, l'intensité de turbulence du vent moyennée sur le rotor de l'éolienne.

Afin de choisir le contrôle optimal de la grandeur de l'éolienne, le procédé se base sur l'utilisation d'une liste prédéterminée d'une pluralité de contrôleurs (au moins deux contrôleurs). L'utilisation d'une pluralité de contrôleurs permet une adaptabilité du contrôle aux différentes conditions de vent, et permet donc un contrôle optimal quelles que soient les conditions de vent. La pluralité de contrôleurs de la liste peuvent être choisis parmi les contrôleurs proportionnels intégral PI, et/ou les régulateurs H∞ avec différentes fonctions de pondération, et/ou des régulateurs quadratiques linéaires LQR et/ou commande prédictive par modèles MPC et/ou des contrôleurs prédictifs basés sur un capteur LIDAR avec différentes pondérations. La liste de contrôleurs peut comprendre plusieurs contrôleurs d'un même type, c'est-à-dire plusieurs contrôleurs paramétrés différemment.

Le procédé selon l'invention peut alors consister à combiner trois aspects : qui sont le contrôle d'une grandeur de l'éolienne (par exemple le contrôle individuel des pales), les caractéristiques du vent qui évoluent lentement ainsi que la prédiction de la fatigue de l'éolienne. Les techniques de modèle de substitution pour la fatigue peuvent être utilisées pour prédire un coût pour l'éolienne soumise au vent courant pour différents contrôleurs d'un ensemble discret. Ceci permet de sélectionner automatiquement en ligne des contrôleurs, sur la base d'un critère de fatigue et permet de contrôler la grandeur de l'éolienne en basculant entre contrôleurs au gré des évolutions des conditions de vent.

Le procédé selon l'invention comporte les étapes suivantes :

1) Construction d'une base de données

2) Mesure de données de vent
3) Détermination du contrôleur par apprentissage automatique
4) Contrôle de la grandeur de l'éolienne

L'étape 1) est une étape réalisée hors ligne au préalable, de manière à limiter la durée du procédé de contrôle en ligne. De plus, le coût de calcul le plus important du procédé selon l'invention est ainsi réalisé hors ligne.

Les étapes 2) à 4) sont réalisées en ligne au cours de l'utilisation de l'éolienne pour un choix du contrôleur en temps réel.

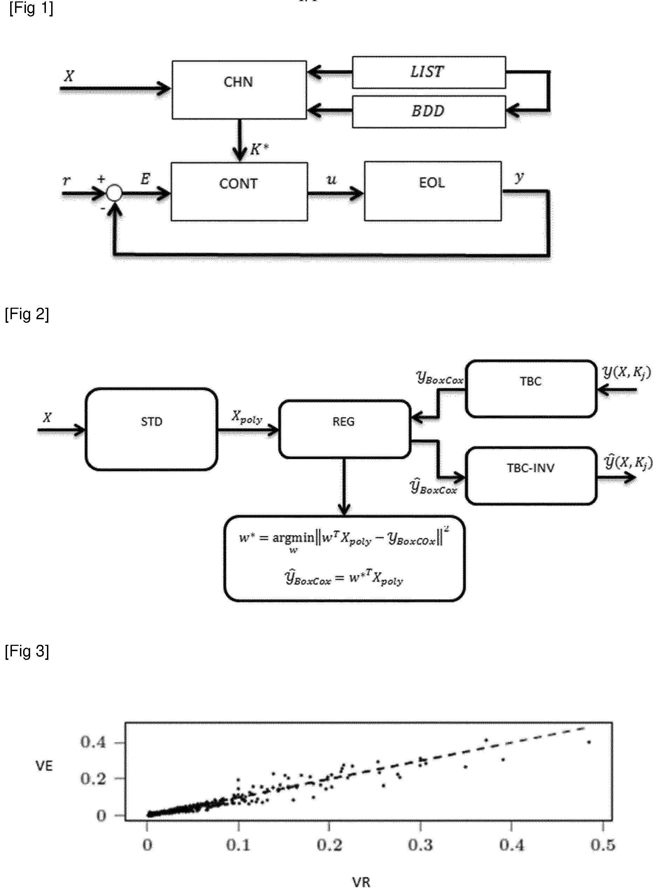

La figure 1 représente, schématiquement et de manière non limitative, les étapes du procédé selon un mode de réalisation de l'invention. Au préalable, on détermine une liste LIST de contrôleurs de la grandeur de l'éolienne. A partir de cette liste LIST de contrôleurs, et au moyen de simulations on construit, hors ligne, une base de données BDD représentative de la fatigue de l'éolienne pour les contrôleurs de la liste LIST et pour des données de vent. En ligne, on mesure des données de vent X. Ces données de vent X mesurées, la liste de contrôleurs LIST et la base de données BDD sont ensuite utilisés par un contrôleur haut niveau CHN pour déterminer, en ligne, un contrôleur K* de la liste LIST qui minimise la fatigue de l'éolienne pour les données de vent mesurées X. Cette détermination du contrôleur K* est mise en oeuvre au moyen d'un apprentissage automatique.

Ensuite, on utilise le contrôleur déterminé K* pour le contrôle CONT, en ligne, de la grandeur de l'éolienne. Dans le mode de réalisation illustré, le contrôle CONT est réalisée en prenant en compte une erreur de régulation E, qui correspond à la différence entre la consigne de régulation r de la grandeur de l'éolienne, et une mesure y de la grandeur de l'éolienne y. Le contrôle CONT génère alors un signal de commande u (par exemple un pas individuel de pale) pour l'éolienne EOL. Selon une option de réalisation, la consigne de régulation r peut être la plupart du temps nulle, pour que le contrôle, notamment le contrôle IPC, puisse réguler les charges déséquilibrant l'éolienne vers 0. En variante, notamment dans le cas des éoliennes flottantes, la consigne r peut être donnée par un contrôleur extérieur pour stabiliser et/ou équilibrer l'éolienne.

Dans la suite de la description, les étapes du procédé de contrôle sont détaillées.

1) Construction de la base de données

Lors de cette étape, on construit, hors ligne, une base de données en simulant pour chaque contrôleur de la liste prédéterminée et pour une pluralité de données de vent, une fonction coût représentative de la fatigue de l'éolienne.

Selon un mode de réalisation de l'invention, la pluralité de données de vent utilisées pour cette étape peuvent être obtenues par des mesures préalables sur le site de l'éolienne. Ainsi, la base de données sera la plus représentative possible.

Alternativement, la pluralité de données de vent utilisées pour cette étape peuvent être obtenues par un simulateur de vent, par exemple le logiciel TurbSim™ (NREL, National Renewable Energy Laboratory) qui est un simulateur de turbulences stochastiques à grande échelle (« full-field »).

La simulation du comportement de l'éolienne peut être mis en oeuvre par un simulateur numérique par exemple un simulateur aéroélastique d'éolienne, tel que le logiciel FAST™ (NREL, National Renewable Energy Laboratory).

Ensuite, on conçoit un critère de coût J, dont la complexité n'est pas une limite puisqu'il est évalué hors-ligne. Typiquement, il est possible d'utiliser des modèles complexe de fatigue des éléments mécaniques de l'éolienne, pour avoir un critère de coût plus fidèle aux dommages subis par l'éolienne. Ces modèles sont pour la plupart non utilisables en ligne, puisqu'une série temporelle assez longue est nécessaire pour évaluer la fatigue avec ces modèles. Ainsi, un des avantages du procédé selon l'invention, est de pouvoir utiliser des modèles complexes de coût de la fatigue de l'éolienne, qui ne peuvent pas être utilisés directement en ligne.

Conformément à une mise en oeuvre de l'invention, le modèle de fatigue peut être un modèle de Palmgram-Miner, qui réalise un comptage du nombre de cycles d'hysteresis de chargement et déchargement. Ce comptage peut être discontinu. De préférence, la méthode de comptage peut être le comptage « rainflow » RFC ( RainFlow Counting » pouvant être traduit littéralement par comptage du « débit pluvial »). Ces méthodes de comptage ne permettent pas que la fatigue soit exprimée comme l'intégrale d'une fonction algébrique du chargement, qui est classiquement utilisée en contrôle optimal (coût des intégrales de fonctions quadratiques). L'intégrale d'une fonction de coût quadratique ne permet d'évaluer la quantité de fatigue, ce qui est un problème lorsque l'on veut évaluer un compromis entre la fatigue de différents éléments. L'un des principaux avantages du procédé selon l'invention est celui de rendre possible l'intégration du calcul de fatigue dans la stratégie globale de contrôle.

On évalue chaque simulation avec le critère de coût J conçu précédemment. Ainsi, la simulation de l'éolienne soumise au vent i, noté $w_i$, en boucle fermée avec le contrôleur $K_j$ appartenant à la liste $K_{list}$, a un coût $y_{ij}=J(w_i,K_j)$. D'autre part, pour réduire le nombres de variables et simplifier le problème, il est possible d'extraire des mesures de vent des caractéristiques capables de caractériser de façon univoque le vent $w_i$, et qui pourraient être corrélées avec la valeur du critère de coût. On peut alors définir la fonction g qui donne à partir du vent $w_i$ le vecteur de caractéristiques

du vent $X_i=g(w_i)$.

2) Mesures des données de vent

Lors de cette étape, on mesure, en ligne, les données de vent, afin de connaître en temps réel le vent arrivant sur l'éolienne.

Selon un mode de réalisation, on peut réaliser ces mesures au moyen d'un capteur Lidar.

3) Détermination du contrôleur par apprentissage automatique

Lors de cette étape, on détermine, en ligne, le contrôleur optimal en termes de fatigue de l'éolienne pour les données de vent mesurées à l'étape précédente. Le contrôleur est déterminé parmi la liste de contrôleur au moyen d'un apprentissage automatique (« machine learning ») qui utilise la base de données construite à l'étape 1) et les mesures de données de vent de l'étape 2) ainsi que la liste des contrôleurs.

Conformément à une mise en oeuvre de l'invention, deux manières de combiner ces données et l'apprentissage automatique pour la sélection des contrôleurs peuvent être envisagées : la prédiction du coût via des techniques de régression (une régression par contrôleur de la liste), et la classification des contrôleurs qui minimisent le critère de coût en fonction du vent courant (données de vent mesurées).

Selon un premier mode de réalisation, la régression peut consister à reconstruire la cartographie $J(w_i, K_j) = Y(g(w_i), K_j) = Y(X_i, K_j)$ avec un fonction $f_{reg}$ telle que :

$$f_{reg} = \underset{\tilde{f}}{\arg\min} \sum_i \sum_j \left\| \tilde{f}(X_i, K_j) - \mathcal{Y}(X_i, K_j) \right\|$$

Où Y est une cartographie associant le vecteur de caractéristiques du vent Xi et le contrôleur Kj au coût correspondant, $\tilde{f}$ défini une classe de fonctions, dont les paramètres sont à optimiser de manière à minimiser l'écart entre les prédictions du modèle et la cartographie. De cette manière, la fonction $f_{reg}$ prédit la valeur du critère de coût pour l'éolienne en boucle fermée avec chacun des contrôleurs de la liste sous le vent courant (données de vent mesurées). De cette manière, il est possible de choisir le contrôleur K* le plus adapté aux conditions de vent courantes X (données de vent mesurées), en prenant le contrôleur minimisant le critère de coût selon la fonction $f_{reg}$ :

$$K^*(X, f_{reg}, K_{list}) = \underset{K_j \in K_{list}}{\arg\min} f_{reg}(X, K_j)$$

Selon un deuxième mode de réalisation, la régression peut comprendre les étapes suivantes :

    i) On standardise les données de vent mesurées ;

    ii) On réalise une augmentation polynomiale desdites données de vent mesurées ; et

    iii) On réalise une régression linéaire desdites données de vent augmentées polynomialement au moyen d'un changement d'espace de la valeur cible.

La standardisation des données de vent permet de ramener les données de vent mesurés vers une loi normale centrée.

L'augmentation polynomiale correspond à la multiplication des coordonnées du vecteur des données de vent entre elles jusqu'à à un certain degré prédéfini. Par exemple des données (x1, x2, x3) peuvent être transformées en (1, x1, x2, x3, x1x2, x1x3, x2x3, $x1^2$, $x2^2$, $x3^2$) pour une augmentation polynomiale de degré 2.

Le changement d'espace de la valeur cible peut être une transformation Box-Cox qui permet de rajouter une non linéarité sur la sortie. La transformation Box-Cox est, en statistiques, une famille de fonctions qui sont appliquées pour créer une transformation monotone de donnés en utilisant des fonctions de puissance. Une telle transformation permet de stabiliser la variance, de rendre les données plus proche d'une distribution de type normale, et d'améliorer la validité des mesures.

Selon un troisième mode de réalisation, la régression peut être basée sur une méthode de forêt aléatoire, de réseau de neurones, de machine à vecteurs de support (de l'anglais Support Vector Machine ou SVM) ou de processus gaussiens.

Selon un aspect de l'invention, la classification des contrôleurs peut consister à synthétiser directement une fonction $f_{cl}$ prédisant le contrôleur le plus adapté à la condition de vent courante X, noté $K^* = f_{cl}(X)$. La fonction $f_{cl}$ peut être définie de la manière suivante :

$$f_{cl} = \underset{\tilde{f}}{\arg\min} \sum_i h\left( \tilde{f}(X_i), \underset{K_j \in K_{list}}{\arg\min} \mathcal{Y}(X_i, K_j)| \right)$$

Où la fonction h donne une idée de la bonne classification du contrôleur :

$$h(K_a, K_b) = \begin{cases} 1 \; si \; K_a \neq K_b \\ 0 \; sinon \end{cases}$$

D'après les premiers résultats, les deux méthodes (régression et classification) semblent équivalentes. On peut noter que selon la technique de classification employée, la régression d'une pseudo-fonction de coût (de la fatigue) peut être réalisée. Cette fonction de coût est la probabilité qu'un contrôleur K soit le contrôleur le plus adapté dans une condition de vent X, notée p(X,K). Enfin le résultat de $f_{cl}$ est le contrôleur qui maximise cette probabilité sous une condition de vent.

La régression présente l'avantage de prédire le coût (de la fatigue) directement, il est donc possible d'établir un seuil pour le basculement de contrôleur et ainsi limiter les basculements d'un contrôleur à un autre, aux seuls basculements qui peuvent permettre un net gain. La classification présente l'avantage de directement minimiser l'erreur de classification, et ainsi de limiter le risque de se tromper de contrôleur lors de la sélection du contrôleur le plus adapté qu'avec la régression.

4) Contrôle de la grandeur de l'éolienne

Lors de cette étape, on contrôle, en ligne, la grandeur de l'éolienne en appliquant le contrôleur déterminé à l'étape 3).

Selon un mode de réalisation correspondant au mode de réalisation de la figure 1, on applique le contrôleur dans la boucle de retour. Le contrôleur prenant en compte l'erreur de régulation entre une consigne de régulation et la mesure de la grandeur de l'éolienne. Dans ce cas, le procédé peut comprendre une étape de mesure de la grandeur contrôlée de l'éolienne.

En outre, la présente invention concerne un système de contrôle d'une grandeur de l'éolienne, apte à mettre en oeuvre le procédé selon l'une quelconque des combinaisons de variantes décrites.

Le système de contrôle comprend au moins :

- Des moyens de stockage de la liste de contrôleurs, et de la base de données construite par simulation,
- Des moyens de mesure des données de vent,
- Des moyens de détermination d'un contrôleur, qui utilisent la liste de contrôleurs et la base de données des moyens de stockage et les mesures de données de vent des moyens de mesure, et
- Des moyens de contrôle pour appliquer le contrôleur déterminé à ladite éolienne.

Selon un mode de réalisation de l'invention, les moyens de détermination d'un contrôleur et les moyens de stockage peuvent être des moyens informatiques.

De plus, le système de contrôle peut comprendre des moyens informatiques de simulation numérique pour construire la base de données.

L'avantage d'utiliser le procédé selon l'invention plutôt que les méthodes de contrôle optimal classique visant aussi à minimiser un critère de coût, est qu'une latitude importante est accordée au critère de coût. En effet, le procédé selon l'invention permet l'utilisation de n'importe quel critère de coût. Il est donc possible d'utiliser des modèles de fatigue mécanique précis, seulement utilisable hors-ligne, contrairement aux modèles MPC (Model Predictive Control) classiques qui nécessitent que le critère de coût puisse sans cesse être réévalué en ligne.

Le deuxième avantage est que le procédé selon l'invention peut permettre d'optimiser le contrôle sur une fonction de coût très complexe en utilisant des techniques de contrôle relativement simple, et de cette manière avoir un coût de calcul en ligne très faible. De plus, le procédé de contrôle selon l'invention est intrinsèquement conçu pour s'adapter à des conditions de vents diverses contrairement à la plupart des autres techniques de contrôle basées sur des modèles linéaires, qui demandent un travail supplémentaire pour la généralisation aux différents cas que l'éolienne puisse rencontrer.

**Exemple**

Les caractéristiques et avantages du procédé de contrôle selon l'invention apparaitront plus clairement à la lecture de l'exemple d'application ci-après.

Pour valider le procédé de contrôle selon l'invention, le procédé a été testé une première fois sur un jeu de données de vents générées par le générateur de vent TurbSim™, et simulées en boucles fermées sur le simulateur aéroélastique d'éolienne FAST™, avec 4 contrôleurs. Les contrôleurs considérées sont des contrôleurs IPC proportionnel intégral PI, correspondant à celui décrit dans Bossanyi et al. (Bossanyi, 2003). Pour cet exemple, un contrôleur CPC énoncé dans Jonkman et al. (Jonkman, 2007) sert à assurer la bonne régulation de la vitesse et la puissance du rotor. Un contrôleur PI donne à partir de l'erreur de régulation entre mesure et valeur désirée $\varepsilon(t)$, défini comme la différence entre grandeur à réguler mesurée et la consigne de régulation, l'entrée pour le système à réguler u(t) de la manière suivante :

$$u(t) = \int_{t_0}^{t} K_I \varepsilon(\tau) d\tau + K_P \varepsilon(t)$$

Où $K_p$ et $K_I$ sont les coefficients proportionnel et intégrateur, qui définissent le contrôleur. Les paramètres des 4 contrôleurs PI considérés dans l'exemple sont les suivants :

[Table 1]

| Contrôleur | $K_P$ | $K_I$ |
|---|---|---|
| 1 | $4.10^{-5}$ | $3.2889.10^{-5}$ |
| 2 | $4.10^{-5}$ | $5.1556.10^{-5}$ |
| 3 | 0.086 | 0.0031 |
| 4 | 0.0186 | 0.0066 |

Les vents utilisés pour créer la base de données (les données d'apprentissage) sont des champs de vent tridimensionnels non uniformes avec turbulences cohérentes. Pour l'apprentissage, 588 vents ont été générés avec 147 combinaisons de paramètres (vitesse moyenne, direction, gradient vertical de vitesse, intensité de turbulence).

Pour être capable de prédire la fatigue en fonction du vent, il faut extraire du vent les caractéristiques permettant d'expliquer la fatigue qui pourrait être obtenue à partir d'algorithmes de reconstruction de vent.

A partir des champs de vent de TurbSim™, le vecteur de vent $\vec{V}(t,y,z) = [u(t,y,z), v(t,y,z), w(t,y,z)]^T$ est obtenu à l'instant $t$ au plan rotor, où y et z sont respectivement les coordonnées horizontales et verticales du champ. Soit V la norme $L_2$ du vecteur $\vec{V}(t,y,z)$.

Les caractéristiques du vent considérés sont la moyenne et l'écart-type sur le temps de la simulation (300 secondes), commençant à $t_0$ et terminant à $t_f$, de la vitesse moyennée sur le rotor notée RAWS (Rotor Average Wind Speed), des gradients horizontaux et verticaux notés $\delta y$ et $\delta z$, et des désalignement de tangage et de lacet notés $\theta_y$ et $\theta_z$. Enfin, l'intensité de turbulence moyennée sur le rotor notée RATI (Rotor Averaged Turbulence Intensity) est calculée pour chaque simulation. Les valeurs instantanées de RAWS, $\delta_y$, $\delta_z$, $\theta_y$ et $\theta_z$ ainsi que la valeur pour toute la simulation de RATI sont exprimées mathématiquement comme suit :

$$RAWS = \frac{1}{S} \int_S V ds$$

$$\delta_y(t) = \frac{1}{S} \int_S \frac{\partial V}{\partial y} ds$$

$$\delta_z(t) = \frac{1}{S} \int_S \frac{\partial V}{\partial z} ds$$

$$\theta_y(t) = \frac{1}{S}\int_S \tan^{-1}\frac{w}{u}\,ds$$

$$\theta_z(t) = \frac{1}{S}\int_S \tan^{-1}\frac{v}{u}\,ds$$

$$RATI = \frac{1}{S}\int_S \frac{\int_{t_0}^{t_f} V^2 dt - \left(\int_{t_0}^{t_f} V dt\right)^2}{\int_{t_0}^{t_f} V dt}\,ds$$

Avec S l'aire du rotor et *ds = dydz* une surface infinitésimale du rotor.

Dans cet exemple, la fonction d'apprentissage automatique f a la structure suivante, illustrée en Figure 2 (de manière non limitative) :

- Standardisation STD des données X (distribution ramenée vers une loi normale centrée)
- Augmentation polynomiale (multiplication des coordonnées du vecteur entre elle jusqu'à un certain degré) (e.g.

$$(x_1, x_2, x_3) \rightarrow (1, x_1, x_2, x_3, x_1 x_2, x_1 x_3, x_2 x_3, x_1^2, x_2^2, x_3^2)$$ pour une augmentation polynomial de degré 2).

Dans notre cas les x sont les caractéristiques du vent. On obtient alors des données $X_{poly}$

- Régression linéaire REG à partir des données $X_{poly}$
- Transformation Box-Cox TBC de la valeur cible (Box & Cox, 1964) qui permet de rajouter une non linéarité sur la sortie

$$y_{BoxCox} = \frac{1}{\lambda}\left(y^\lambda - 1\right)$$

- Transformation box cox inverse TBC-INV permet de calculer la prédiction en fatigue.

w* est un vecteur qui est le résultat de l'optimisation de ces coefficients de manière à minimiser l'écart entre les prédictions et la cartographie dans l'espace Box-Cox. L'équation de $\hat{Y}$ montre comment est utilisé w* pour prédire le coût dans l'espace Box-Cox à partir de Xpoly.

Ce schéma de régression est réalisé pour chaque contrôleur $K_j$, et l'ensemble de ces régressions donnent la fonction *f*. Donc on peut écrire $f(X,K_j) = \hat{Y}(X,K_j)$.

Les premiers tests ont montré que le modèle de substitution de la procédure d'évaluation du coût permet effectivement de prédire le coût correctement sur des données de tests non utilisées lors de l'apprentissage (construction de la base de données). L'algorithme de régression a appris sur un ensemble tirés au hasard sans remise de 294 vents, 4 régressions ont été obtenues, une pour chaque contrôleur.

L'algorithme est testé sur 294 échantillons de vents tirés au hasard, sans remise, non utilisés pour l'apprentissage (la base de données). La figure 3 représente les valeurs réelles VR et les valeur estimées VE par le procédé selon l'invention. Il est possible de voir sur la figure 3 que l'algorithme prédit correctement le coût de chaque simulation, ici les prédictions pour les quatre simulations sont représentées.

Pour évaluer la qualité du procédé selon l'invention, deux indicateurs peuvent être utilisés :

$$R^2(K) = 1 - \frac{var(y(K) - \hat{y}(K))}{var(y(K))}$$

$$R_{dec}(K) = 1 - \frac{\sum_i \mathcal{Y}(K^*, X_i)}{\min_K \sum_i (K, X_i)}$$

$R^2$ donne une indication de la qualité de l'algorithme de régression, plus il est proche de 1 et plus la régression est de qualité. $R_{dec}$ donne une idée de la diminution de fatigue qui pourrait être atteinte en utilisant les meilleurs contrôleurs K* déterminés par la régression, sans tenir compte du coût qui pourrait être ajouté par les basculements d'un contrôleur à l'autre.

Le tableau 2 donnes les valeurs des indicateurs. Les scores $R^2$ sont supérieurs à 0.9 pour chaque régression. Par conséquent, la méthode de régression est de bonne qualité. D'après les scores $R_{dec}$, l'algorithme pourrait effectivement permettre de diminuer le coût de l'éolienne d'au moins de 20% par rapport au meilleur contrôleur de l'ensemble des candidats seul.

[Table 2]

| Contrôleur | $R^2$ | $R_{dec}$ |
|---|---|---|
| 1 | 0.93 | 23% |
| 2 | 0.96 | 35% |
| 3 | 0.93 | 36% |
| 4 | 0.92 | 26% |

## Revendications

1. Procédé de contrôle d'une grandeur d'une éolienne (EOL), pour lequel on dispose d'une liste (LIST) d'une pluralité de contrôleurs de ladite grandeur de ladite éolienne, dans lequel on réalise les étapes suivantes :

   a) On construit, hors ligne, une base de données (BDD) en simulant pour chaque contrôleur de ladite liste (LIST) et pour une pluralité de données de vent, une fonction coût représentative de la fatigue de ladite éolienne ;
   b) On mesure, en ligne, des données de vent (X) ;
   c) On détermine, en ligne, un contrôleur (CONT) de ladite liste (LIST) qui minimise la fatigue de ladite éolienne pour lesdites données de vent mesurées au moyen d'un apprentissage automatique à partir de ladite base de données ; et
   d) On contrôle, en ligne, ladite grandeur de ladite éolienne (EOL) au moyen dudit contrôleur (CONT) déterminé.

2. Procédé de contrôle selon la revendication 1, dans lequel ladite pluralité de contrôleurs de ladite liste (LIST) sont choisis parmi les contrôleurs proportionnels intégral PI, et/ou les régulateurs H∞ avec différentes fonctions de pondération, et/ou des régulateurs quadratiques linéaires LQR avec différentes pondérations, et/ou des commandes prédictives MPC avec différentes pondérations et/ou des commandes prédictives basées sur des mesures LIDAR.

3. Procédé de contrôle selon l'une des revendications précédentes, dans lequel on met en oeuvre ledit apprentissage automatique au moyen d'une méthode de régression (REG) qui prédit la fatigue de ladite éolienne pour chacun des contrôleurs de ladite liste ou au moyen d'une méthode de classification desdits contrôleurs de ladite liste qui minimisent le critère de coût en fonction des données de vent mesurées.

4. Procédé de contrôle selon la revendication 3, dans lequel on met en oeuvre ledit apprentissage automatique au moyen d'une méthode de régression au moyen des étapes suivantes :

   i) On standardise (STD) les données de vent mesurées ;
   ii) On réalise une augmentation polynomiale desdites données de vent mesurées ; et
   iii) On réalise une régression linéaire desdites données de vent augmentées polynomialement au moyen d'un changement d'espace de la valeur cible.

5. Procédé de contrôle selon la revendication 3, dans on met en oeuvre ledit apprentissage automatique au moyen d'une méthode de régression basée sur une méthode de forêt aléatoire, de réseau de neurones, de machine à vecteurs de support ou de processus gaussiens.

6.  Procédé de contrôle selon l'une des revendications précédentes, dans lequel on contrôle l'angle individuel ou le pas individuel d'au moins une pale de ladite éolienne (EOL).

7.  Procédé de contrôle selon l'une des revendications précédentes, dans lequel lesdits contrôleurs de ladite liste (LIST) prennent en compte en outre une erreur de régulation entre une consigne de régulation (r) de ladite grandeur de ladite éolienne et une mesure (y) de ladite grandeur de ladite éolienne.

8.  Procédé de contrôle selon l'une des revendications précédentes, dans lequel lesdites données de vent utilisées pour la construction de ladite base de données (BDD) sont issues de mesures sur le site de ladite éolienne.

9.  Procédé de contrôle selon l'une des revendications 1 à 7, dans lequel lesdites données de vent utilisées pour la construction de ladite base de données (BDD) sont issues d'un simulateur de vent.

10. Système de contrôle d'une grandeur d'une éolienne mettant en oeuvre le procédé de contrôle selon l'une des revendications précédentes, ledit système de contrôle comprenant des moyens de stockage de ladite liste (LIST) de contrôleurs, et de ladite base de données (BDD) construite en simulant pour une pluralité de données de vent une fonction coût représentative de la fatigue de ladite éolienne pour chaque contrôleur de ladite liste, des moyens de mesures de données de vent, des moyens de détermination d'un contrôleur (CONT) de ladite liste qui minimise la fatigue de ladite éolienne pour lesdites données de vent mesurées au moyen d'un apprentissage automatique à partir de ladite base de données (BDD), et des moyens de contrôle de ladite grandeur de ladite éolienne (EOL).

**Patentansprüche**

1.  Verfahren zur Steuerung einer Größe einer Windkraftanlage (EOL), für die eine Liste (LIST) einer Vielzahl von Steuerungen der Größe der Windkraftanlage zur Verfügung steht, wobei die folgenden Schritte durchgeführt werden:

    a) Offline-Aufbau einer Datenbank (BDD) durch Simulation einer Kostenfunktion für jede Steuerung der Liste (LIST) und für eine Vielzahl von Winddaten, die für die Ermüdung der Windkraftanlage repräsentativ ist;
    b) Online-Messung von Winddaten (X);
    c) Online-Bestimmung einer Steuerung (CONT) der Liste (LIST), die die Ermüdung der Windkraftanlage für die gemessenen Winddaten minimiert, durch maschinelles Lernen aus der Datenbank; und
    d) Online-Steuerung der Größe der Windkraftanlage (EOL) durch die bestimmte Steuerung (CONT).

2.  Steuerungsverfahren nach Anspruch 1, wobei die Vielzahl der Steuerungen der Liste (LIST) aus integralen proportionalen Steuerungen PI, und/oder H∞-Reglern mit unterschiedlichen Gewichtungsfunktionen, und/oder linearen quadratischen Reglern LQR mit unterschiedlichen Gewichtungen, und/oder prädiktiven MPC-Regelungen mit unterschiedlichen Gewichtungen und/oder prädiktiven Regelungen basierend auf LIDAR-Messungen ausgewählt werden.

3.  Steuerungsverfahren nach einem der vorhergehenden Ansprüche, bei dem das automatische Lernen mittels einer Regressionsmethode (REG) durchgeführt wird, die die Ermüdung der Windturbine für jede der Steuerungen in der Liste vorhersagt, oder mittels einer Methode zur Klassifizierung der Steuerungen der Liste, die das Kostenkriterium in Abhängigkeit von den gemessenen Winddaten minimieren.

4.  Steuerungsverfahren nach Anspruch 3, wobei das automatische Lernen mittels einer Regressionsmethode durch die folgenden Schritte implementiert wird:

    i.) Standardisieren (STD) der gemessenen Winddaten;
    ii.) Durchführen einer polynomialen Erhöhung der gemessenen Winddaten; und
    iii.) Durchführen einer linearen Regression der polynomial erhöhten Winddaten mittels einer Raumänderung des Zielwerts.

5.  Steuerungsverfahren nach Anspruch 3, wobei das automatische Lernen mittels einer Regressionsmethode durchgeführt wird, die auf einer Random-Forest-Methode, einem neuronalen Netz, einer Support-Vektor-Maschine oder einem Gaußschen Prozess basiert.

6. Steuerungsverfahren nach einem der vorhergehenden Ansprüche, bei dem der individuelle Winkel oder die individuelle Pitch von mindestens einem Blatt der Windkraftanlage (EOL) gesteuert wird.

7. Steuerungsverfahren nach einem der vorhergehenden Ansprüche, wobei die Steuerungen der Liste (LIST) zusätzlich einen Regelungsfehler zwischen einem Regelungssollwert (r) der Größe der Windkraftanlage und einer Messung (y) der Größe der Windkraftanlage berücksichtigen.

8. Steuerungsverfahren nach einem der vorhergehenden Ansprüche, wobei die Winddaten, die für den Aufbau der Datenbank (BDD) verwendet werden, aus Messungen am Standort der Windkraftanlage stammen.

9. Steuerungsverfahren nach einem der Ansprüche 1 bis 7, wobei die Winddaten, die für den Aufbau der Datenbank (BDD) verwendet werden, von einem Windsimulator stammen.

10. System zur Steuerung der Größe einer Windkraftanlage, das das Steuerungsverfahren nach einem der vorhergehenden Ansprüche durchführt, wobei das Steuerungssystem Mittel zur Speicherung der Liste (LIST) von Steuerungen und der Datenbank (BDD), die aufgebaut wird, indem für eine Vielzahl von Winddaten eine Kostenfunktion simuliert wird, die für die Ermüdung der Windkraftanlage für jede Steuerung der Liste repräsentativ ist, Mittel zur Messung von Winddaten, Mittel zur Bestimmung einer Steuerung (CONT) der Liste, die die Ermüdung der Windkraftanlage für die gemessenen Winddaten durch maschinelles Lernen aus der Datenbank (BDD) minimiert, und Mittel zur Steuerung der Größe der Windkraftanlage (EOL) umfasst.

**Claims**

1. Method for controlling a quantity of a wind turbine (EOL) for which a list (LIST) of a plurality of controllers of said quantity of said wind turbine is available, wherein the following steps are carried out:

    a) constructing a database (BDD) offline by simulating, for each controller of said list (LIST) and for a plurality of wind data, a cost function representative of the fatigue of said wind turbine;
    b) measuring wind data (X) online;
    c) determining online a controller (CONT) of said list (LIST) that minimizes the fatigue of said wind turbine for said measured wind data by means of machine learning based on said database; and
    d) controlling online said quantity of said wind turbine (EOL) by means of said controller (CONT) thus determined.

2. Control method according to Claim 1, wherein said plurality of controllers of said list (LIST) is selected from among proportional integral PI controllers, and/or H∞ regulators with various weighting functions, and/or linear quadratic regulators LQR with various weightings, and/or predictive controls MPC with various weightings and/or predictive controls based on LiDAR measurements.

3. Control method according to one of the previous claims, wherein said machine learning is implemented by means of a regression method (REG) predicting the fatigue of said wind turbine for each controller of said list or by means of a method for classifying said controllers of said list that minimize the criterion of cost depending on the measured wind data.

4. Control method according to Claim 3, wherein said machine learning is implemented by means of a regression method by means of the following steps:

    i) standardizing (STD) the measured wind data;
    ii) performing a polynomial increase in said measured wind data; and
    iii) performing a linear regression of said polynomially increased wind data by means of a change in space of the target value.

5. Control method according to Claim 3, wherein said machine learning is implemented by means of a regression method based on a random-forest method, a neural-network method, a support-vector-machine method or a Gaussian-process method.

6. Control method according to one of the previous claims, wherein the individual angle or the individual pitch of at least one blade of said wind turbine (EOL) is controlled.

7. Control method according to one of the previous claims, wherein said controllers of said list (LIST) further take account of a regulation error between a regulation setpoint (r) of said quantity of said wind turbine and a measurement (y) of said quantity of said wind turbine.

8. Control method according to one of the previous claims, wherein said wind data used to construct said database (BDD) are obtained from measurements taken on the site of said wind turbine.

9. Control method according to one of Claims 1 to 7, wherein said wind data used for constructing said database (BDD) are obtained from a wind simulator.

10. System for controlling a quantity of a wind turbine employing the control method according to one of the previous claims, said control system comprising means for storing said list (LIST) of controllers, and said database (BDD) constructed by simulating for a plurality of wind data a cost function representative of the fatigue of said wind turbine for each controller of said list, means for measuring wind data, means for determining a controller (CONT) of said list that minimizes the fatigue of said wind turbine for said measured wind data by means of machine learning based on said database (BDD), and means for controlling said quantity of said wind turbine (EOL).

[Fig 1]

[Fig 2]

$$w^* = \underset{w}{\mathrm{argmin}} \lVert w^T X_{poly} - \mathcal{Y}_{BoxCox} \rVert^2$$

$$\hat{\mathcal{Y}}_{BoxCox} = w^{*T} X_{poly}$$

[Fig 3]

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2976630
- US 10041473 B
- FR 2988442

- US 9458826 B
- CN 107654336 A
- US 2017328346 A1

**Littérature non-brevet citée dans la description**

- **BOSSANYI, E.** Individual blade pitch control for load réduction. *Wind Energy,* 2003, 119-128
- **SCHLIPF, D.** Look-ahead cyclic pitch control using LiDAR. *The science of making torque from wind,* 2010
- **BURTON, T.** Wind Energy Handbook. 2011
- **LU, Q. ; BOWYER, R. ; JONES, B. L.** Analysis and design of Coleman transform-based individual pitch controllers for wind-turbine load réduction. *Wind Energy,* 2015, 1451-1468
- **COLEMAN, R. P ; FEINGOLD, A. M.** Theory of self-excited mechanical oscillations of helicopter rotors with hinged blades. National Advisory Committee for Aerounautics, 1957

- **RAACH, S. ; SCHLIPF, D.** Nonlinear model prédictive control of floating wind turbines with individual pitch control. *American Control Conférence (ACC),* 2014, 4434-4439
- **DIMITROV, N. ; KELLY, M.** From wind to loads: wind turbine site-specific load estimation using databases with high-fidelity load simulations. *Wind Energy Science Discussions,* 2018
- **MURCIA, J. ; RÉTHORÉ, P. ; DIMITROV, N.** Uncertainty propagation through an aeroelastic wind turbine model using polynomial surrogates. *Renewable Energy,* 2017, 910-922
- **CLIFTON, A. ; SCHRECK, S.** Turbine inflow characterization at the national wind technology center. *Journal of Solar Energy Engineering,* 2013